(19) Europäisches Patentamt
European Patent Office
Office européen des brevets

(11) **EP 1 353 143 B1**

(12) **FASCICULE DE BREVET EUROPEEN**

(45) Date de publication et mention
de la délivrance du brevet:
**03.06.2015 Bulletin 2015/23**

(51) Int Cl.:
**G01B 11/25** (2006.01)    **B24B 9/14** (2006.01)
**B24B 49/12** (2006.01)    **G02C 13/00** (2006.01)
**G01M 11/02** (2006.01)

(21) Numéro de dépôt: **03290884.0**

(22) Date de dépôt: **09.04.2003**

(54) **Dispositif de mesure du profil de lentilles**

Vorrichtung zum Messen des Profils von Linsen

Lens measuring device

(84) Etats contractants désignés:
**AT BE BG CH CY CZ DE DK EE ES FI FR GB GR HU IE IT LI LU MC NL PT RO SE SI SK TR**

(30) Priorité: **12.04.2002 FR 0204622**

(43) Date de publication de la demande:
**15.10.2003 Bulletin 2003/42**

(73) Titulaire: **ESSILOR INTERNATIONAL (Compagnie Générale d'Optique)**
**F-94220 Charenton-le-Pont (FR)**

(72) Inventeurs:
• **Guillermin, Laurent**
  **75011 Paris (FR)**
• **Millet, Sylvaine**
  **95230 Soisy-sous-Montmorency (FR)**

(74) Mandataire: **Santarelli**
**49, avenue des Champs-Elysées**
**75008 Paris (FR)**

(56) Documents cités:
EP-A- 1 250 979    DE-A- 3 827 122
DE-A- 19 727 226    US-A- 5 717 781

**Description**

L'invention a trait à l'usinage des lentilles ophtalmiques, c'est-à-dire à l'ensemble des opérations visant à conférer à la tranche de la lentille une forme prédéterminée correspondant le plus précisément possible à celle du cercle d'une monture de lunettes dans laquelle est destinée à être montée la lentille.

Rappelons qu'une lentille, montée sur un arbre support, subit d'abord une opération d'ébauchage dans laquelle elle est meulée par sa tranche jusqu'à ce que cette dernière présente grossièrement - c'est-à-dire, généralement, avec surcote - la forme prédéterminée, puis une ou plusieurs opérations de finition consistant à affiner la forme de la tranche, et, éventuellement, à lui donner une configuration structurelle particulière, par exemple en usinant sur la tranche un biseau ou, au contraire, une rainure.

Une fois ces opérations effectuées, la lentille est démontée de son arbre support pour son montage dans le cercle de monture. Toutefois, il peut alors être constaté que la lentille n'est pas parfaitement adaptée audit cercle, ce qui nécessite une opération supplémentaire de retouche, consistant à retirer à nouveau une certaine quantité de matière à la lentille par sa tranche pour l'adapter au cercle de monture.

Généralement, lorsque la lentille ne nécessite que des retouches mineures, une telle opération de retouche est effectuée manuellement par l'opticien.

Toutefois, une telle opération manuelle de retouche implique, pour l'opticien, de constants allers-retours de la meuleuse à la monture pour vérifier la correspondance de la lentille au cercle de monture, ce qui est fastidieux.

De plus, une telle retouche manuelle est, par nature, imprécise, et il arrive que des défauts n'apparaissant pas à l'oeil nu nuisent à la bonne tenue de la lentille dans son cercle de monture.

L'imprécision de cette retouche manuelle peut d'ailleurs conduire à une mise au rebut de la lentille si elle présente des défauts incorrigibles.

C'est pourquoi la tendance est à l'automatisation des retouches que doivent subir les lentilles. Toutefois, pour que cette automatisation soit possible, il est nécessaire de connaître la forme du contour qui a été conféré à la tranche lors des opérations d'usinage, qu'il s'agisse de l'ébauchage ou d'une finition.

Par ailleurs, la lentille peut être démontée de son arbre support, aussi, entre l'opération d'ébauchage et l'opération suivante de finition, qu'il s'agisse d'effectuer une première vérification de la correspondance entre la forme de la lentille et celle du cercle de monture ou, le cas échéant, de changer de machine d'usinage.

Dans l'un et l'autre des cas qui viennent d'être présentés, le fait de démonter la lentille de son arbre support peut provoquer la perte du repère tridimensionnel lié à la lentille et utilisé pour conférer, lors de l'usinage, la forme prédéterminée à la tranche de la lentille.

Des solutions ont été proposées pour conserver ce repère lorsque la lentille est séparée de son arbre support.

Ainsi, certains arbres supports présentent en bout une partie amovible, communément appelée "gland" qui, positionnée et orientée de manière précise sur l'une des faces de la lentille, est fixée sur celle-ci, généralement au moyen d'un adhésif.

Un tel gland, qui possède des moyens de détrompage pour son montage en bout de l'arbre support permet, certes, la conservation du repère lié à la lentille.

Toutefois, la pose de ce gland sur la lentille impose de nombreuses manipulations dont la définition et la localisation d'un point sur la lentille pour la fixation du gland. Généralement, la pose du gland est d'ailleurs effectuée au moyen d'une machine spécifique coûteuse.

L'invention vise à résoudre notamment les inconvénients précités et à permettre un usinage de la lentille, ou une retouche de celle-ci, à la fois plus simple, plus fiable et plus précis, tout en permettant des gains substantiels de productivité.

A cet effet, l'invention propose, selon un premier aspect, un procédé pour relever la forme d'un contour d'une lentille ophtalmique préalablement usinée, qui comporte les opérations consistant à :

- éclairer une face optique de la lentille au moyen d'un faisceau lumineux plan pour former sur cette face une tache lumineuse linéaire, de manière que le faisceau déborde de ladite face et éclaire ledit contour ;
- former sur des moyens de réception optique une image de ladite tache lumineuse ;
- entraîner en rotation la lentille autour d'un axe ;
- balayer le contour au moyen du faisceau lumineux ;
- relever conjointement sur les moyens de réception optique les positions successives d'au moins un point singulier de cette image correspondant au point éclairé dudit contour ;
- en déduire la forme dudit contour.

Il est alors possible de procéder à une nouvelle opération d'usinage complémentaire, automatique, de la lentille. Il suffit par exemple d'effectuer une comparaison avec la forme prédéterminée du contour du cercle de monture auquel est destinée la lentille pour retrouver le repère d'usinage.

Selon un deuxième aspect, l'invention propose également un ensemble comportant une lentille ophtalmique et un dispositif pour relever la forme d'un contour de ladite lentille ophtalmique, lequel dispositif comporte :

- une source lumineuse en regard d'une face optique de la lentille apte à produire un faisceau lumineux plan, agencée, d'une part pour éclairer ladite face optique de la lentille et y former une tache lumineuse linéaire, et d'autre part pour que le faisceau déborde de ladite face ;
- des moyens de réception optique pointés vers ladite tache lumineuse ;

- des moyens pour entraîner en rotation la lentille autour d'un axe fixe par rapport à la source lumineuse et aux moyens de réception optique ;
- des moyens pour déterminer la forme dudit contour en fonction des positions successives, sur les moyens de réception optique, de l'image d'un point éclairé du contour.

Selon un mode de réalisation, dans l'opération de relevé, on déduit de la position dudit point singulier sur les moyens de réception optique, la distance à l'axe de rotation, du point éclairé correspondant dudit contour.

En outre, dans l'opération de relevé, on peut également déduire, de la position sur les moyens de réception optique dudit point singulier, la coordonnée du point éclairé correspondant dudit contour suivant l'axe de rotation.

La face éclairée de la lentille étant délimitée par un bord périphérique, on peut relever, dans l'opération de relevé, la forme de ce bord.

La lentille présentant une tranche munie d'un biseau présentant un flanc bordé extérieurement par une crête et intérieurement par un pied, on peut relever, dans l'opération de relevé, la forme de la crête et/ou la forme du pied.

Après avoir relevé la forme de la crête et celle du bord périphérique, on peut en déduire la distance de la crête audit bord, parallèlement à l'axe de rotation.

La ou les déductions dont il est question ci-dessus sont, par exemple, effectuées au moyen d'un ou plusieurs calculs par triangulation.

Le dispositif comporte par exemple un calculateur, programmé à cet effet, qui est relié aux moyens de réception optique.

L'axe de rotation peut être choisi parallèle à l'axe optique de la lentille.

De préférence, la source lumineuse est écartée de l'axe de rotation, en étant agencée pour que ledit faisceau et ledit axe de rotation soient coplanaires.

En outre, la source lumineuse peut également être agencée pour que la bissectrice du faisceau lumineux soit sensiblement parallèle à l'axe de rotation de la lentille.

Selon un mode de réalisation, les moyens de réception optique présentent un axe de pointage optique formant avec la bissectrice du faisceau lumineux un angle de pointage constant, non nul, dont la valeur est par exemple comprise entre 40° et 50°, de préférence égale à 45°.

Par exemple, l'axe de pointage et la bissectrice du faisceau lumineux forment conjointement un plan perpendiculaire au plan du faisceau.

En outre, la source lumineuse est, de préférence, agencée pour produire un faisceau lumineux cohérent. Il s'agit par exemple d'un laser.

D'autres caractéristiques et avantages de l'invention apparaîtront à la lumière de la description qui va suivre d'un mode de réalisation donné à titre d'exemple non limitatif, description faite en référence aux dessins annexés dans lesquels :

- la figure 1 est une vue en perspective d'une lentille ophtalmique ayant subi au moins une opération d'ébauchage, et dont une face est partiellement éclairée au moyen d'un faisceau lumineux plan débordant de la face, et formant sur cette face une tache lumineuse linéaire, des moyens de réception optique étant par ailleurs pointés vers la tache lumineuse pour relever la forme du bord de la face éclairée ;
- la figure 2 est une vue en plan de dessus de la lentille de la figure 1, suivant la direction indiquée sur cette figure par la flèche II, la lentille étant montée sur un arbre support rotatif, les moyens de réception optique étant représentés schématiquement et par transparence ;
- la figure 3 est une vue en coupe de la lentille des figures 1 et 2, suivant le plan de coupe matérialisé sur la figure 2 par la ligne III-III, la tranche de la lentille étant ici cylindrique ;
- la figure 4 est une vue schématique illustrant l'écran des moyens de réception optique, sur lequel apparaît une image de la tache lumineuse formée sur la lentille de la figure 3 ;
- la figure 5 est une vue analogue à la figure 3, sur laquelle la lentille présente, sur sa tranche, un biseau ;
- la figure 6 est une vue analogue à la figure 4, l'image apparaissant sur l'écran étant celle de la tache lumineuse formée sur la lentille de la figure 5.

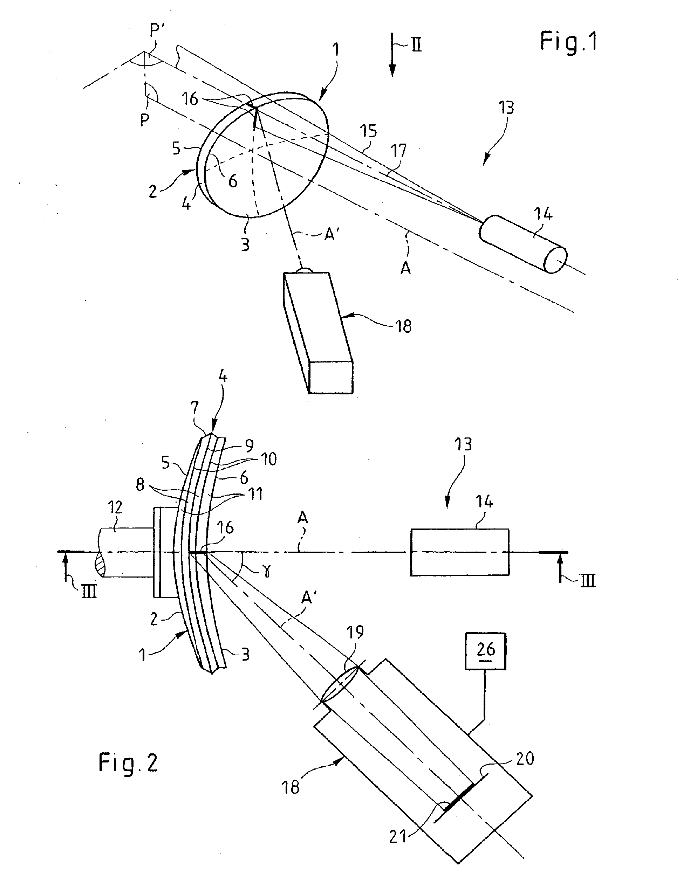

Sur la figure 1 est représentée une lentille ophtalmique 1 qui présente deux surfaces optiques constituées respectivement par une face dite avant 2 et une face dite arrière 3 opposées, reliées par une tranche 4 qui était initialement cylindrique à profil circulaire, mais qui, après une opération d'usinage, présente un contour correspondant sensiblement à celui d'un cercle de monture de lunettes dans lequel est destinée à être montée cette lentille 1.

La lentille 1 présente, à la jonction de sa tranche 4 et de sa face avant 2, un bord avant 5 périphérique qui délimite radialement la face avant 2 et, à la jonction de sa tranche 4 et de sa face arrière 3, un bord arrière 6 périphérique qui délimite radialement la face arrière 3.

Dans un premier cas, la tranche 4 de la lentille 1 est cylindrique parce qu'elle n'a subi qu'une opération d'ébauchage et doit encore subir une ou plusieurs opérations complémentaires de finition.

Dans un deuxième cas, la tranche 4 de la lentille 1 est aussi cylindrique, mais pour une raison différente : elle a subi une opération de finition à la suite de laquelle elle présente un aspect lisse, couramment appelé finition "glace".

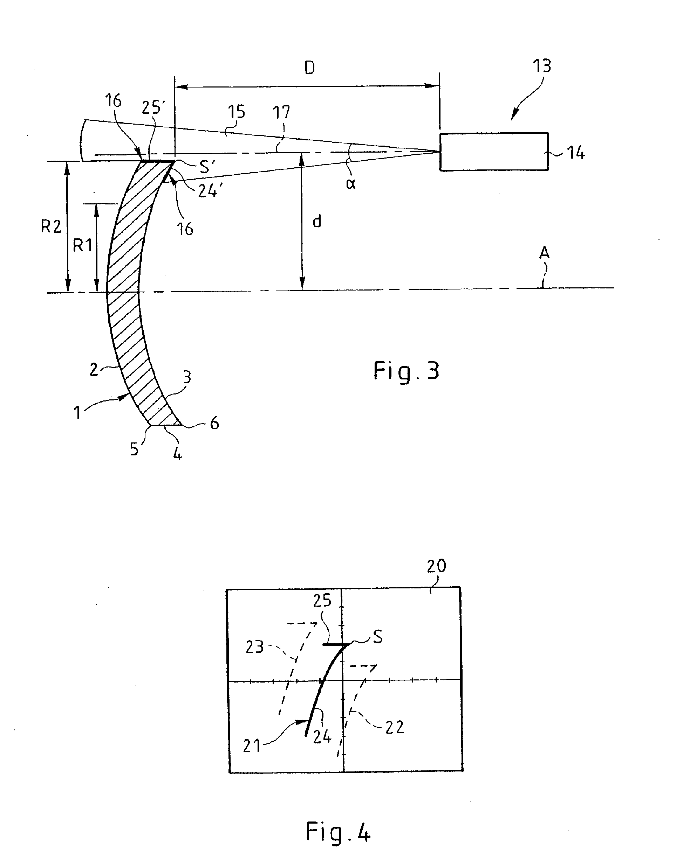

Ces deux cas sont illustrés par la figure 3.

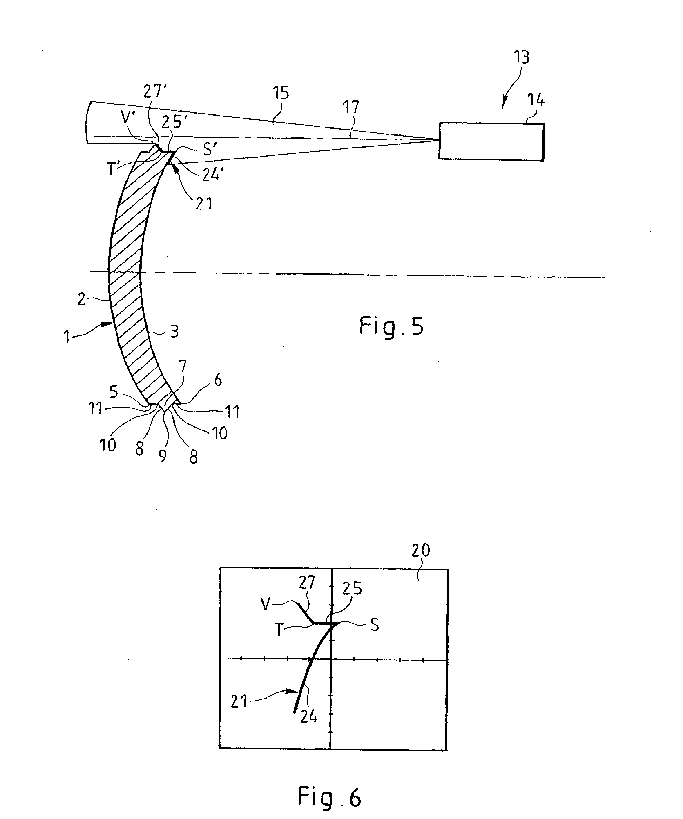

Dans un troisième cas, la lentille 1 a subi une ou plusieurs opérations particulières de finition, en l'occurrence une opération de biseautage, à la suite de laquelle la tranche 4 de la lentille est pourvue d'un biseau 7 en saillie radiale, tel que représenté sur les figures 2 et 5.

Ce biseau 7 présente deux flancs 8 opposés, délimités chacun, d'une part, extérieurement, par une ligne de crête 9 où les flancs 8 se rejoignent, et d'autre part, intérieurement, par un pied 10 qui est sa ligne de jonction avec la partie cylindrique 11 adjacente de la tranche 4.

Dans le deuxième et le troisième cas, la lentille 1 doit encore subir au moins une opération complémentaire de retouche, après que l'on a constaté que la forme de la tranche 4 n'est pas identique à la forme, prédéterminée, du cercle de monture dans lequel la lentille 1 est destinée à être montée.

Dans ces trois cas, l'on souhaite, afin de permettre la réalisation automatique de ces opérations complémentaires, relever la forme d'au moins un contour de la lentille 1.

Dans le premier et dans le deuxième cas définis ci-dessus, ce contour est constitué par le bord avant 5 ou le bord arrière 6 de la tranche 4.

Dans le troisième cas défini ci-dessus, l'on souhaite pouvoir relever la forme d'au moins l'un des contours suivants :

- le bord avant 5 ou le bord arrière 6,
- la crête 9 du biseau 7,
- le pied 10 de l'un au moins des flancs 8.

Pour permettre le ou chaque relevé prévu, la lentille 1 est montée sur un arbre support 12 susceptible d'être entraîné en rotation autour d'un axe A sensiblement confondu avec l'axe optique de la lentille 1, bien que, comme nous le verrons par la suite, il ne soit pas nécessaire de faire exactement coïncider ces deux axes, un écart angulaire de quelques degrés étant toléré.

Sur la figure 2, un seul arbre support 12 est représenté, mais la lentille 1 peut être maintenue par pincement entre deux arbres supports coaxiaux en vis-à-vis et entraînés conjointement en rotation autour de leur axe commun A.

Le ou chaque relevé est effectué sans contact au moyen d'un dispositif de mesure optique 13 comprenant une source lumineuse 14 disposée en regard de l'une des faces 2, 3 de la lentille 1.

Cette source lumineuse 14 est agencée pour produire un faisceau lumineux plan 15 s'étendant à l'intérieur d'un secteur angulaire et dirigé vers la face 2, 3 pour y former une tache lumineuse 16 linéaire.

L'on précise que la visibilité de cette tache 16 résulte d'un phénomène de diffusion à l'impact du faisceau 15 sur la lentille 1, phénomène permis par la rugosité de la surface de la lentille 1.

Cette source lumineuse 14 est de préférence un laser, choisi pour sa précision, le faisceau lumineux produit étant alors cohérent.

La source lumineuse 14 est disposée de telle sorte que la bissectrice 17 du faisceau soit sensiblement parallèle à l'axe A de rotation de la lentille 1, le plan que forme conjointement la bissectrice et l'axe A étant noté P, et de telle sorte que ce plan P soit confondu avec le plan du faisceau 15.

Par ailleurs, la source lumineuse 14 est agencée de manière que le faisceau 15 rencontre toujours la lentille 1, mais en débordant de celle-ci quelle que soit sa position angulaire, afin que le contour dont on souhaite relever la forme soit toujours éclairé.

De préférence, la source lumineuse 14 est agencée pour que la bissectrice 17 du faisceau 15 se trouve à l'extérieur de la lentille 1 quelle que soit la position angulaire de celle-ci, afin que la tranche 4 soit toujours éclairée, au moins partiellement (figures 3 et 5).

Pour satisfaire les conditions qui viennent d'être dictées, l'on peut notamment agir sur la distance d de la source lumineuse 14 à l'axe de rotation A de la lentille 1, sa distance D à la face éclairée, et sur l'ouverture angulaire α du faisceau lumineux 15.

Ainsi, si l'on suppose que la tranche 4 de la lentille 1 s'étend entre deux cylindres concentriques centrés sur l'axe A de rotation de la lentille 1, de rayons respectifs R1 et R2 (avec R2 > R1), on veillera à satisfaire les conditions suivantes :

$$d > R2$$

et

$$\alpha > 2 \operatorname{Arctan} \frac{R2 - R1}{D}$$

Le dispositif de mesure optique 13 comprend, en outre, des moyens de réception optique 18, sous la forme d'une caméra munie d'un objectif 19 et d'un écran 20 photosensible.

La caméra 18 est pointée vers la tache lumineuse 16. Plus précisément, cette caméra 18 présente un axe de pointage A', confondu avec l'axe optique de son objectif 19, qui coupe le faisceau lumineux 15 sur sa bissectrice 17 au voisinage de la tache lumineuse 16, en sorte qu'il se forme une image 21 linéaire de celle-ci sur l'écran 20 (figures 4 et 6).

La caméra 18 est orientée, d'une part, pour que son axe de pointage A' forme, conjointement avec la bissectrice 17 du faisceau lumineux 15 un plan, noté P', perpendiculaire au plan P.

Elle est d'autre part orientée pour que son axe de pointage A' forme avec la bissectrice 17 du faisceau lumineux 15 un angle y, dit angle de pointage, constant, non nul.

La valeur de cet angle de pointage γ est par exemple comprise entre 40° et 50°. De préférence, la valeur de l'angle de pointage γ est sensiblement égale à 45°.

Par ailleurs, suivant un mode de réalisation illustré sur la figure 2, l'écran 20 s'étend dans un plan perpendiculaire à l'axe de pointage A', mais il peut également être incliné par rapport à celui-ci pour former un angle non droit, par exemple d'environ 45°.

Pour procéder au relevé de la forme du contour choisi, l'on procède comme suit.

La lentille 1 est entraînée en rotation autour de son axe A.

Lors de cette rotation, la tache lumineuse 16 se déplace entre deux lignes extrêmes de rebroussement dont les images 22, 23 sont représentées en traits interrompus sur la figure 4, la distance moyenne séparant ces deux lignes de rebroussement étant appelée profondeur de champ.

Bien entendu, la taille de l'écran 20 et la distance de la lentille 1 à laquelle se trouve la caméra 18 sont choisies en fonction de la profondeur de champ pour que l'image 21 ne sorte jamais de l'écran 20.

Généralement, la profondeur de champ est connue par avance, de sorte qu'il est possible d'effectuer un préréglage de l'écran 20.

Lorsque la lentille 1 correspond au premier ou au deuxième cas présentés ci-dessus, l'image 21 de la tache 16 se présente sous la forme d'une ligne brisée présentant une section courbe 24, image de l'intersection 24' du faisceau lumineux 15 avec la face 5, 6 éclairée.

Cette section courbe 24 est prolongée par une section droite 25 qui forme avec elle un angle et qui est l'image de l'intersection 25' du faisceau lumineux 15 avec la tranche 4 de la lentille 1.

La section courbe 24 et la section droite 25 se rejoignent en un point singulier S qui est l'image du point S' du bord 5, 6 éclairé.

Les positions successives du point singulier S sur l'écran 20 sont relevées à chaque instant, pour chaque position angulaire de la lentille 1.

Des solutions connues permettent d'effectuer un tel relevé. Ainsi, l'écran 20 peut être constitué par un capteur optique matriciel de type CCD, les images 21 qui s'y forment faisant alors l'objet d'un traitement numérique classique.

On déduit alors, à partir des positions successives du point singulier S sur l'écran 20 :

- par un premier calcul, les distances du point éclairé 24' du bord 5, 6 à l'axe de rotation A successives et, éventuellement,
- par un deuxième calcul, les coordonnées successives, suivant l'axe A de rotation, du point éclairé 24' du bord 5, 6.

Ces calculs peuvent être réalisés par triangulation au moyen d'un calculateur 26 programmé à cet effet, dont est pourvu le dispositif 13, et qui est relié aux moyens de réception optique 18.

Les résultats des calculs sont mémorisés, pour chaque position angulaire de la lentille 1, dans le calculateur 26, en sorte qu'à la suite d'une révolution complète de la lentille 1, l'on dispose d'une modélisation du bord 5, 6.

Les résultats du premier calcul fournissent à eux seuls une modélisation bidimensionnelle du bord 5, 6 correspondant à la projection de celui-ci sur un plan perpendiculaire à l'axe de rotation A de la lentille 1.

L'on est alors en mesure de procéder à une finition du type glace ou à une retouche, automatiques, de la lentille 1 par meulage de sa tranche 4.

La combinaison des résultats des deux calculs fournit, quant à elle, une modélisation de la forme tridimensionnelle du bord 5, 6.

Et l'on est alors en mesure de procéder à une finition élaborée de la lentille 1, telle qu'un chanfreinage, un biseautage, ou encore un rainurage de sa tranche 4.

Lorsque la lentille 1 correspond au troisième cas présenté ci-dessus, l'image 21 de la tache 16 se présente sous la forme d'une ligne brisée présentant une section courbe 24, image de l'intersection 24' du faisceau lumineux 15 avec la face 5, 6 éclairée.

Cette section courbe 24 est prolongée par une première section droite 25 qui forme avec elle un angle et qui est l'image de l'intersection 25' du faisceau lumineux 15 avec la partie cylindrique 11 de la tranche 4 de la lentille 1, adjacente au biseau 7.

Cette première section droite 25 et la section courbe 24 se rejoignent en un premier point singulier S qui est l'image du point S' du bord 5, 6 éclairé.

La première section droite 25 est prolongée par une deuxième section droite 27 qui forme un angle avec elle et qui est l'image de l'intersection 27' du faisceau lumineux 15 et du flanc 8 éclairé du biseau 7.

La première 25 et la deuxième 27 sections droites se rejoignent en un deuxième point singulier T qui est l'image du point T' du pied 10 éclairé.

La deuxième section droite 27 se termine par un point d'extrémité V qui est l'image du point V' éclairé de la crête 9 du biseau 7.

On sélectionne sur l'image 21 au moins l'un de ces points S, T, V, et on effectue les calculs présentés ci-dessus pour déduire des positions successives de ce point S, T, V sur l'écran 20, la distance du point réel correspondant S', T', V' de la lentille 1 à son axe de rotation A et, éventuellement, la coordonnée de ce point réel S', T', V' suivant l'axe de rotation A.

De la même manière que précédemment décrit, et en fonction de la sélection et des calculs effectués, il est donc possible d'obtenir un relevé de la forme bidimensionnelle (c'est-à-dire en projection dans un plan perpendiculaire à l'axe de rotation A de la lentille 1) ou de la forme tridimensionnelle :

- du bord éclairé 5, 6 de la tranche 4 de la lentille 1, et/ou

- de la crête 9 du biseau 7, et/ou
- du pied 10 du flanc 8 éclairé du biseau 7.

En effectuant en outre une comparaison systématique entre les coordonnées du point éclairé V de la crête 9 ou du pied 10 du flanc 8, et du point S du bord 5, 6 éclairé, l'on obtient, pour toute position angulaire de la lentille 1, la localisation du biseau 7 par rapport à la face 2, 3 éclairée, suivant l'axe A de rotation.

Ceci est utile notamment lorsqu'on souhaite à la fois retoucher la forme du biseau 7 et chanfreiner le bord 5, 6.

Une fois la forme du contour 5, 6, 9, 10 mémorisée dans le calculateur 26, dans lequel a également été mémorisée, au préalable, la forme finale que l'on souhaite conférer audit contour 5, 6, 9, 10, le calculateur 26 peut effectuer une corrélation des deux formes et adapter en conséquence le repère d'usinage par rapport auquel sont déterminées les consignes d'usinage.

Par "adaptation", on entend, d'une part, le centrage du repère et l'orientation tridimensionnelle de ses axes. Cette opération de superposition a notamment été décrite dans la demande internationale n° WO-99/26759 au nom de la demanderesse, à laquelle on pourra se référer.

## Revendications

1. Procédé pour relever la forme d'un contour (5, 6, 9, 10) d'une lentille ophtalmique (1) préalablement usinée, qui comporte les opérations consistant à :

   - éclairer une face optique (2, 3) de la lentille (1) au moyen d'un faisceau lumineux (15) plan pour former sur cette face (2, 3) une tache lumineuse (16) linéaire, de manière que le faisceau (15) déborde de ladite face (2, 3) et éclaire ledit contour (5, 6, 9, 10) ;
   - former sur des moyens de réception optique (18) une image (21) de ladite tache lumineuse (16) ;
   - entraîner en rotation la lentille (1) autour d'un axe (A) ;
   - balayer le contour (5, 6, 9, 10) au moyen du faisceau lumineux (15) ;
   - relever conjointement sur les moyens de réception optique (18) les positions successives d'au moins un point singulier (S, T, V) de cette image (21) correspondant au point éclairé (S', T', V') dudit contour (5, 6, 9, 10) ;
   - en déduire la forme dudit contour (5, 6, 9, 10).

2. Procédé selon la revendication 1, **caractérisé en ce que**, dans l'opération de relevé, on déduit de la position dudit point singulier (S', T', V') sur les moyens de réception optique (18), la distance à l'axe de rotation (A), du point éclairé (S, T, V) correspondant dudit contour (5, 6, 9, 10).

3. Procédé selon la revendication 2, **caractérisé en ce que**, dans l'opération de relevé, on déduit en outre, de la position sur les moyens de réception optique (18) dudit point singulier (S, T, V), la coordonnée du point éclairé correspondant (S', T', V') dudit contour (5, 6, 9, 10) suivant l'axe de rotation (A).

4. Procédé selon l'une des revendications 1 à 3, **caractérisé en ce que**, la face éclairée (2, 3) de la lentille (1) étant délimitée par un bord périphérique (5, 6), on relève, dans l'opération de relevé, la forme de ce bord (5, 6).

5. Procédé selon l'une des revendications 1 à 4, **caractérisé en ce que**, la lentille (1) présentant une tranche (4) munie d'un biseau (7) présentant un flanc (8) bordé extérieurement par une crête (9) et intérieurement par un pied (10), on relève, dans l'opération de relevé, la forme de la crête (9).

6. Procédé selon l'une des revendications 1 à 5, **caractérisé en ce que**, la lentille (1) présentant une tranche (4) munie d'un biseau (7) présentant un flanc (8) bordé intérieurement par un pied (10), on relève, dans l'opération de relevé, la forme du pied (10).

7. Procédé selon les revendications 3, 5 et 6, prises conjointement, **caractérisé en ce qu'**on relève, dans l'opération de relevé, la forme de la crête (9) et celle du bord (5, 6) périphérique, et on en déduit la distance de la crête (9) audit bord (5, 6), parallèlement à l'axe de rotation (A).

8. Procédé selon l'une des revendications 1 à 7, **caractérisé en ce que** ladite déduction est effectuée au moyen d'un calcul par triangulation.

9. Procédé selon l'une des revendications 1 à 8, **caractérisé en ce que** l'axe de rotation (A) est choisi parallèle à l'axe optique de la lentille (1).

10. Procédé selon l'une des revendications 1 à 9, **caractérisé en ce que** le faisceau lumineux (15) est écarté de l'axe de rotation (A).

11. Procédé selon l'une des revendications 1 à 10, **caractérisé en ce que** ledit faisceau (15) et ledit axe de rotation (A) sont coplanaires.

12. Procédé selon l'une des revendications 1 à 11, **caractérisé en ce que** le faisceau lumineux (15) présente une bissectrice (17) sensiblement parallèle à l'axe de rotation (A) de la lentille (1).

13. Procédé selon la revendication 12, **caractérisé en**

**ce que** les moyens de réception optique (18) présentent un axe de pointage optique (A') formant avec la bissectrice (17) du faisceau lumineux (15) un angle de pointage ($\gamma$) constant, non nul.

**14.** Procédé selon la revendication 13, **caractérisé en ce que** la valeur de l'angle de pointage ($\gamma$) est comprise entre 40° et 50°, de préférence égale à 45°.

**15.** Procédé selon la revendication 13 ou 14, **caractérisé en ce que** l'axe de pointage (A') et la bissectrice (17) du faisceau lumineux (15) forment conjointement un plan (P') perpendiculaire au plan (P) du faisceau (15).

**16.** Procédé selon l'une des revendications 1 à 15, **caractérisé en ce que** ledit faisceau lumineux (15) est cohérent.

**17.** Procédé selon la revendication 16, **caractérisé en ce que** ledit faisceau lumineux (15) est un laser.

**18.** Ensemble comportant une lentille ophtalmique (1) et un dispositif pour relever la forme d'un contour (5, 6, 9, 10) de ladite lentille ophtalmique (1), lequel dispositif comporte :

> - une source lumineuse (14) en regard d'une face optique (2, 3) de la lentille (1), apte à produire un faisceau lumineux (15) plan, agencée, d'une part pour éclairer ladite face optique (2, 3) de la lentille (1) et y former une tache lumineuse (16) linéaire, et d'autre part pour que le faisceau (15) déborde de ladite face (2, 3) ;
> - des moyens de réception optique (18) pointés vers ladite tache lumineuse (16) ;
> - des moyens (12) pour entraîner en rotation la lentille (1) autour d'un axe (A) fixe par rapport à la source lumineuse (14) et aux moyens de réception optique (18) ;
> - des moyens (26) pour déterminer la forme dudit contour (5, 6, 9, 10) en fonction des positions successives, sur les moyens de réception optique (18), d'au moins un point singulier (S,T,V) de l'image (21) correspondant au point éclairé (S',T',V') dudit contour (5,6,9,10).

**19.** Ensemble selon la revendication 18, **caractérisé en ce que** la source lumineuse (14) est écartée de l'axe de rotation (A) de la lentille (1).

**20.** Ensemble selon la revendication 18 ou 19, **caractérisé en ce que** la source lumineuse (14) est agencée pour que ledit faisceau (15) et ledit axe de rotation (A) soient coplanaires.

**21.** Ensemble selon l'une des revendications 18 à 20, **caractérisé en ce que** la source lumineuse (14) est agencée pour que la bissectrice (17) dudit faisceau lumineux (15) soit sensiblement parallèle à l'axe de rotation (A) de la lentille (1).

**22.** Ensemble selon la revendication 21, **caractérisé en ce que** les moyens de réception optique (18) présentent un axe de pointage optique (A') formant avec la bissectrice (17) du faisceau lumineux (15) un angle de pointage ($\gamma$) constant, non nul.

**23.** Ensemble selon la revendication 22, **caractérisé en ce que** les moyens de réception optique (18) sont agencés pour que la valeur de l'angle de pointage ($\gamma$) est comprise entre 40 et 50°, de préférence égale à 45°.

**24.** Ensemble selon la revendication 22 ou 23, **caractérisé en ce que** la source lumineuse (14) et les moyens de réception optique (18) sont agencés pour que l'axe de pointage (A') et la bissectrice (17) du faisceau lumineux (15) forment conjointement un plan (P') perpendiculaire au plan (P) du faisceau (15).

**25.** Ensemble selon l'une des revendications 18 à 24, **caractérisé en ce que** ladite source lumineuse (14) est agencée pour produire un faisceau lumineux (15) cohérent.

**26.** Ensemble selon la revendication 25, **caractérisé en ce que** ladite source lumineuse (14) est un laser.

**Patentansprüche**

**1.** Verfahren zum Erfassen der Form einer Kontur (5, 6, 9, 10) einer vorher maschinell bearbeiteten ophthalmischen Linse (1), das die Vorgänge aufweist, die darin bestehen:

> - eine optische Seite (2, 3) der Linse (1) mittels eines ebenen Lichtstrahls (15) zur Bildung eines linearen Lichtflecks (16) auf dieser Seite (2, 3) so zu beleuchten, dass der Strahl (15) über die Seite (2, 3) hinausgeht und die Kontur (5, 6, 9, 10) beleuchtet;
> - auf optischen Empfangseinrichtungen (18) ein Bild (21) des Lichtflecks (16) zu bilden;
> - die Linse (1) um eine Achse (A) in Drehung zu versetzen;
> - die Kontur (5, 6, 9, 10) mit dem Lichtstrahl (15) zu überstreichen;
> - gemeinsam auf den optischen Empfangseinrichtungen (18) die aufeinanderfolgenden Positionen mindestens eines singulären Punkts (S, T, V) dieses Bilds (21) entsprechend dem beleuchteten Punkt (S', T', V') der Kontur (5, 6, 9, 10) zu erfassen;

- daraus die Form der Kontur (5, 6, 9, 10) abzuleiten.

2. Verfahren nach Anspruch 1, **dadurch gekennzeichnet, dass** beim Erfassungsvorgang von der Position des singulären Punkts (S, T, V) auf den optischen Empfangseinrichtungen (18) der Abstand des entsprechenden beleuchteten Punkts (S', T', V') der Kontur (5, 6, 9, 10) zur Drehachse (A) abgeleitet wird.

3. Verfahren nach Anspruch 2, **dadurch gekennzeichnet, dass** beim Erfassungsvorgang außerdem von der Position des singulären Punkts (S, T, V) auf den optischen Empfangseinrichtungen (18) die Koordinate des entsprechenden beleuchteten Punkts (S', T', V') der Kontur (5, 6, 9, 10) gemäß der Drehachse (A) abgeleitet wird.

4. Verfahren nach einem der Ansprüche 1 bis 3, **dadurch gekennzeichnet, dass**, da die beleuchtete Seite (2, 3) der Linse (1) von einem Umfangsrand (5, 6) begrenzt wird, im Erfassungsvorgang die Form dieses Rands (5, 6) erfasst wird.

5. Verfahren nach einem der Ansprüche 1 bis 4, **dadurch gekennzeichnet, dass**, da die Linse (1) eine Schmalseite (4) hat, die mit einer Abschrägung (7) versehen ist, die eine Flanke (8) hat, welche außen von einer Spitze (9) und innen von einem Fuß (10) umrandet wird, im Erfassungsvorgang die Form der Spitze (9) erfasst wird.

6. Verfahren nach einem der Ansprüche 1 bis 5, **dadurch gekennzeichnet, dass**, da die Linse (1) eine Schmalseite (4) hat, die mit einer Abschrägung (7) versehen ist, die eine Flanke (8) hat, welche innen von einem Fuß (10) umrandet wird, im Erfassungsvorgang die Form des Fußes (10) erfasst wird.

7. Verfahren nach den Ansprüchen 3, 5 und 6 zusammen genommen, **dadurch gekennzeichnet, dass** im Erfassungsvorgang die Form der Spitze (9) und diejenige des Umfangsrands (5, 6) erfasst und daraus der Abstand der Spitze (9) zum Rand (5, 6) parallel zur Drehachse (A) abgeleitet wird.

8. Verfahren nach einem der Ansprüche 1 bis 7, **dadurch gekennzeichnet, dass** die Ableitung mittels einer Triangulationsrechnung ausgeführt wird.

9. Verfahren nach einem der Ansprüche 1 bis 8, **dadurch gekennzeichnet, dass** die Drehachse (A) parallel zur optischen Achse der Linse (1) gewählt wird.

10. Verfahren nach einem der Ansprüche 1 bis 9, **dadurch gekennzeichnet, dass** der Lichtstrahl (15) zur Drehachse (A) beabstandet ist.

11. Verfahren nach einem der Ansprüche 1 bis 10, **dadurch gekennzeichnet, dass** der Strahl (15) und die Drehachse (A) koplanar sind.

12. Verfahren nach einem der Ansprüche 1 bis 11, **dadurch gekennzeichnet, dass** der Lichtstrahl (15) eine Winkelhalbierende (17) im Wesentlichen parallel zur Drehachse (A) der Linse (1) hat.

13. Verfahren nach Anspruch 12, **dadurch gekennzeichnet, dass** die optischen Empfangseinrichtungen (18) eine optische Ausrichtachse (A') haben, die mit der Winkelhalbierenden (17) des Lichtstrahls (15) einen konstanten Ausrichtwinkel ($\gamma$) ungleich Null bildet.

14. Verfahren nach Anspruch 13, **dadurch gekennzeichnet, dass** der Wert des Ausrichtwinkels ($\gamma$) zwischen 40° und 50° liegt, vorzugsweise gleich 45° ist.

15. Verfahren nach Anspruch 13 oder 14, **dadurch gekennzeichnet, dass** die Ausrichtachse (A') und die Winkelhalbierende (17) des Lichtstrahls (15) zusammen eine Ebene (P') lotrecht zur Ebene (P) des Strahls (15) bilden.

16. Verfahren nach einem der Ansprüche 1 bis 15, **dadurch gekennzeichnet, dass** der Lichtstrahl (15) kohärent ist.

17. Verfahren nach Anspruch 16, **dadurch gekennzeichnet, dass** der Lichtstrahl (15) ein Laser ist.

18. Einheit, die eine ophthalmische Linse (1) und eine Vorrichtung aufweist, um die Form einer Kontur (5, 6, 9, 10) der ophthalmischen Linse (1) zu erfassen, wobei die Vorrichtung aufweist:

    - eine Lichtquelle (14) gegenüber einer optischen Seite (2, 3) der Linse (1), die einen ebenen Lichtstrahl (15) erzeugen kann, die einerseits, um die optische Seite (2, 3) der Linse (1) zu beleuchten und dort einen linearen Lichtfleck (16) zu bilden, und andererseits eingerichtet ist, damit der Strahl (15) über die Seite (2, 3) hinausgeht;
    - optische Empfangseinrichtungen (18), die auf den Lichtfleck (16) gerichtet sind;
    - Einrichtungen (12), um die Linse (1) um eine bezüglich der Lichtquelle (14) und der optischen Empfangseinrichtungen (18) ortsfeste Achse (A) in Drehung zu versetzen;
    - Einrichtungen (26), um die Form der Kontur (5, 6, 9, 10) abhängig von den aufeinanderfolgenden Positionen, auf den optischen Empfangseinrichtungen (18), mindestens eines singulären Punkts (S, T, V) des Bilds (21) entsprechend dem beleuchteten Punkt (S', T', V') der Kontur (5, 6, 9, 10) zu bestimmen.

**19.** Einheit nach Anspruch 18, **dadurch gekennzeichnet, dass** die Lichtquelle (14) zur Drehachse (A) der Linse (1) beabstandet ist.

**20.** Einheit nach Anspruch 18 oder 19, **dadurch gekennzeichnet, dass** die Lichtquelle (14) eingerichtet ist, damit der Strahl (15) und die Drehachse (A) koplanar sind.

**21.** Einheit nach einem der Ansprüche 18 bis 20, **dadurch gekennzeichnet, dass** die Lichtquelle (14) eingerichtet ist, damit die Winkelhalbierende (17) des Lichtstrahls (15) im Wesentlichen parallel zur Drehachse (A) der Linse (1) ist.

**22.** Einheit nach Anspruch 21, **dadurch gekennzeichnet, dass** die optischen Empfangseinrichtungen (18) eine optische Ausrichtachse (A') haben, die mit der Winkelhalbierenden (17) des Lichtstrahls (15) einen konstanten Ausrichtwinkel ($\gamma$) ungleich Null bildet.

**23.** Einheit nach Anspruch 22, **dadurch gekennzeichnet, dass** die optischen Empfangseinrichtungen (18) eingerichtet sind, damit der Wert des Ausrichtwinkels ($\gamma$) zwischen 40 und 50° liegt, vorzugsweise gleich 45° ist.

**24.** Einheit nach Anspruch 22 oder 23, **dadurch gekennzeichnet, dass** die Lichtquelle (14) und die optischen Empfangseinrichtungen (18) eingerichtet sind, damit die Ausrichtachse (A') und die Winkelhalbierende (17) des Lichtstrahls (15) zusammen eine Ebene (P') lotrecht zur Ebene (P) des Strahls (15) bilden.

**25.** Einheit nach einem der Ansprüche 18 bis 24, **dadurch gekennzeichnet, dass** die Lichtquelle (14) eingerichtet ist, um einen kohärenten Lichtstrahl (15) zu erzeugen.

**26.** Einheit nach Anspruch 25, **dadurch gekennzeichnet, dass** die Lichtquelle (14) ein Laser ist.

## Claims

**1.** Process for plotting the shape of a contour (5, 6, 9, 10) of a previously machined ophthalmic lens (1), which comprises the operations consisting of:

- illuminating an optical face (2, 3) of the lens (1) by means of a flat light beam (15) to form a linear light spot (16) on this face (2, 3) such that the beam (15) extends beyond said face (2, 3) and illuminates said contour (5, 6, 9, 10);
- forming on optical reception means (18) an image (21) of said light spot (16);
- rotating the lens (1) about an axis (A);
- scanning the contour (5, 6, 9, 10) using the light beam (15);
- plotting concomitantly on the optical reception means (18) the successive positions of at least one single point (S, T, V) of this image (21) corresponding to the illuminated point (S', T', V') of said contour (5, 6, 9, 10);
- deducing the shape of said contour (5, 6, 9, 10) therefrom.

**2.** Process according to claim 1, **characterized in that**, in the plotting operation, the distance to the rotational axis (A), of the corresponding illuminated point (S', T', V') of said contour (5, 6, 9, 10) is deduced from the position of said single point (S, T, V) on the optical reception means (18).

**3.** Process according to claim 2, **characterized in that**, in the plotting operation, the coordinate of the corresponding illuminated point (S', T', V') of said contour (5, 6, 9, 10) following the rotational axis (A) is moreover deduced from the position on the optical reception means (18) of said singular point (S, T, V).

**4.** Process according to one of claims 1 to 3, **characterized in that**, the illuminated face (2, 3) of the lens (1) being delimited by a peripheral edge (5, 6), the shape of this edge (5, 6) is plotted in the plotting operation.

**5.** Process according to one of claims 1 to 4, **characterized in that**, the lens (1) having a rim (4) provided with a bevel (7) having a flank (8) borded externally by a crest (9) and internally by a base (10), the shape of the crest (9) is plotted in the plotting operation.

**6.** Process according to one of claims 1 to 5, **characterized in that**, the lens (1) having a rim (4) provided with a bevel (7) having a flank (8) borded internally by a base (10), the shape of the base (10) is plotted in the plotting operation.

**7.** Process according to claims 3, 5 and 6, taken together, **characterized in that** the shape of the crest (9) and that of the peripheral edge (5, 6) are plotted in the plotting operation, and the distance of the crest (9) to said edge (5, 6), parallel to the rotational axis (A), is deduced therefrom.

**8.** Process according to one of claims 1 to 7, **characterized in that** said deduction is carried out using a calculation by triangulation.

9. Process according to one of claims 1 to 8, **characterized in that** the rotational axis (A) is chosen parallel to the optical axis of the lens (1).

10. Process according to one of claims 1 to 9, **characterized in that** the light beam (15) is separated from the rotational axis (A).

11. Process according to one of claims 1 to 10, **characterized in that** said beam (15) and said rotational axis (A) are coplanar.

12. Process according to one of claims 1 to 11, **characterized in that** the light beam (15) has a bisector (17) approximately parallel to the rotational axis (A) of the lens (1).

13. Process according to claim 12, **characterized in that** the optical reception means (18) have an optical sight axis (A') forming with the bisector (17) of the light beam (15) a constant sight angle (γ), which is not zero.

14. Process according to claim 13, **characterized in that** the value of the sight angle (γ) is comprised between 40° and 50°, preferably equal to 45°.

15. Process according to claim 13 or 14, **characterized in that** the sight axis (A') and the bisector (17) of the light beam (15) together form a plane (P') perpendicular to the plane (P) of the beam (15).

16. Process according to one of claims 1 to 15, **characterized in that** said light beam (15) is coherent.

17. Process according to claim 16, **characterized in that** said light beam (15) is a laser.

18. Arrangement comprising an ophthalmic lens (1) and a device for plotting the shape of a contour (5, 6, 9, 10) of said ophthalmic lens (1), which device comprises:

   - a light source (14) opposite an optical face (2,3) of the lens (1), capable of producing a flat light beam (15), set up on the one hand to illuminate said optical face (2, 3) of the lens (1) and form a linear light spot (16) there, and on the other hand so that the beam (15) extends beyond said face (2, 3);
   - optical reception means (18) pointed towards said light spot (16);
   - means (12) for rotating the lens (1) about a fixed axis (A) with respect to the light source (14) and the optical reception means (18);
   - means (26) for determining the shape of said contour (5, 6, 9, 10) according to the successive positions, on the optical reception means (18), of at least one single point (S, T, V) of the image 21 corresponding to the illuminated point (S', T', V') of said contour (5, 6, 9, 10).

19. Arrangement according to claim 18, **characterized in that** the light source (14) is separated from the rotational axis (A) of the lens (1).

20. Arrangement according to claim 18 or 19, **characterized in that** the light source (14) is set up such that said beam (15) and said rotational axis (A) are coplanar.

21. Arrangement according to one of claims 18 to 20, **characterized in that** the light source (14) is set up such that the bisector (17) of said light beam (15) is approximately parallel to the rotational axis (A) of the lens (1).

22. Arrangement according to claim 21, **characterized in that** the optical reception means (18) have an optical sight axis (A') forming with the bisector (17) of the light beam (15) a constant sight angle (γ), which is not zero.

23. Arrangement according to claim 22, **characterized in that** the optical reception means (18) are set up such that the value of the sight angle (γ) is comprised between 40 and 50°, preferably equal to 45°.

24. Arrangement according to claim 22 or 23, **characterized in that** the light source (14) and the optical reception means (18) are set up such that the sight axis (A') and the bisector (17) of the light beam (15) form together a plane (P') perpendicular to the plane (P) of the beam (15).

25. Arrangement according to one of claims 18 to 24, **characterized in that** said light source (14) is set up to produce a coherent light beam (15).

26. Arrangement according to claim 25, **characterized in that** said light source (14) is a laser.

EP 1 353 143 B1

Fig.1

Fig.2

11

Fig. 3

Fig. 4

Fig.5

Fig.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9926759 A